# EUROPÄISCHE PATENTSCHRIFT

(11) **EP 1 008 469 B1**
(45) Veröffentlichungstag und Bekanntmachung des Hinweises auf die Patenterteilung: **03.07.2002**
(21) Anmeldenummer: 99102116.3
(22) Anmeldetag: 03.02.1999
(51) Int. Cl.: B60D 1/60, B60D 1/06

(54) **Sicherungseinrichtung**
Security system
Dispositif de sécurité

(30) Priorität: 07.12.1998 DE 29821750 U
(43) Veröffentlichungstag der Anmeldung: 14.06.2000
(73) Patentinhaber: Albe Berndes GmbH Zugkugelkupplungen, 32312 Lübbecke (DE)
(72) Erfinder: Berndes, Karl-Josef, 32312 Lübbecke (DE)
(74) Vertreter: Stracke, Alexander, Dipl.-Ing.

(56) Entgegenhaltungen:
- DE-A- 4 304 552
- DE-U- 8 519 623
- DE-U- 8 909 872

## Beschreibung

Die vorliegende Erfindung betrifft eine Sicherungseinrichtung gemäß dem Oberbegriff des Anspruchs 1.

Eine gattungsgemäße Sicherungseinrichtung ist aus dem Dokument DE-85 19 623-U bekannt geworden.

Derartige SicherungseinrichtungenSicherungseinrichtungen dienen dazu das unbefügte Benutzen eines Anhängers oder dergleichen zu verhindern. Dabei wird bei den bekannten Sicherungseinrichtungen der Riegel im hinteren quer durch das Gehäuse geführt, so daß der davor liegende Handgriff als Sperre gegen ein Lösen des Gehäuses dient.

Zur Sicherung des Riegels ist an einer Seite des Gehäuses eine Lasche angeschweißt, die eine Bohrung aufweist, durch die der Schließbolzen einer Schließeinrichtung, beispielsweise eines Vorhängeschlosses, ebenso führbar ist, wie eine deckungsgleich in diese Position verschiebbare Öffnung des Riegels, der an der anderen Seite abgewinkelt ist, so daß einerseits durch diese Abwinklung und andererseits durch die geschlossene Verbindung mit der Lasche eine beidseitige Sicherung gegen ein Herausziehen gegeben ist.

Nachteilig bei den bekannten Sicherungseinrichtungen ist zum einen der hohe Fertigungsaufwand, insbesondere durch die separate Ausbildung der Lasche und deren Anschweißung am Gehäuse, und zum anderen die geringe Sicherheit gegen eine mutwillige Beschädigung.

So ist der Zugang zu dem Schließbolzen weitgehend frei, mit der Folge, daß mit geeigneten Werkzeugen, beispielsweise einer Metallsäge oder einem Bolzenschneider die Schließeinrichtung gewaltsam geöffnet werden kann.

Der vorliegenden Erfindung liegt daher die Aufgabe zugrunde, eine Sicherungseinrichtung der gattungsgemäßen Art so auszubilden, daß sie konstruktiv einfacher aufgebaut und dadurch kostengünstiger herstellbar ist und daß ein gewaltsames Öffnen wirkungsvoller verhindert wird.

Diese Aufgabe wird durch eine Sicherungseinrichtung gelöst, die die Merkmale des Anspruchs 1 aufweist.

Auf das Anbringen zusätzlicher Bauteile, wie der zum Stand der Technik genannten Lasche zum Verschließen des Riegels, kann nun verzichtet werden, da die Sicke durch einen einfachen Stanzvorgang herzustellen ist.
Eine weitere Bearbeitung, auch spangebende, ist nicht erforderlich, so daß sich insgesamt ein erheblicher Kostenvorteil gegenüber den bekannten Sicherungseinrichtungen ergibt.

Ein Gedanke der Erfindung sieht vor, daß in Gebrauchsstellung die beiden sich gegenüberliegenden Sickenwände den Schließbolzen einer Schließeinrichtung, beispielsweise eines Vorhängeschlosses, überragen, der durch eine Bohrung des Riegels geführt ist, wobei der Riegel eine im Sickengrund angeordnete Durchstecköffnung durchtritt, die in ihren Grundrißabmaßen etwa den Querschnittsabmaßen des Riegels entspricht und nur geringfügig größer ist. Dabei läuft die bekanntermaßen rechteckige Durchstecköffnung quer zur Sickenachse, so daß der Schließbolzen parallel dazu angeordnet ist. Die Sickenbreite ist so gehalten, daß einerseits ausreichend Platz für den Riegel Durchtritt bleibt, andererseits ein so geringer Abstand zum Schließbolzen ist, daß der Einsatz eines Werkzeuges, um den Schließbolzen zu durchtrennen, beispielsweise eines Bolzenschneiders, ausgeschlossen ist.

Ferner ist nach der Erfindung vorgesehen, beidseitig des Gehäuses jeweils eine Sicke einzubringen, so daß auch das der Schließeinrichtung gegenüberliegende Ende des Riegels mit einer entsprechend angepaßten Ausformung in der Sicke so einliegt, daß der Einsatz eines Werkzeuges zum gewaltsamen Durchtrennen des Riegels nahezu unmöglich ist.

Eine weiter bevorzugte Ausführung der neuen Sicherungseinrichtung ist so gestaltet, daß die Sicken in Längsachsrichtung des Gehäuses verlaufen, ebenso wie dadurch bedingt der Schließbolzen. Eine derartige Anbringung hat beim Einsatz handelsüblicher Vorhängeschlösser den Vorteil, daß die Schlüsselseite nach unten gerichtet werden kann. Die gegenüberliegende, üblicherweise geschlossene Rückseite des Vorhängeschlosses ist sozusagen die Witterungsseite, so daß das Schloß selbst ausreichend vor Witterungseinflüssen geschützt ist.

Selbstverständlich ist es auch möglich, die Sicke quer zur Längsseite des Gehäuses anzuordnen, so daß sie in Gebrauchsstellung der Sicherungseinrichtung vertikal verläuft.

Neben einer durchgehenden Ausbildung der Sicke, also deren Verlauf über die gesamte Länge bzw. Höhe der Gehäusewand, kann die Sicke auch partiell eingebracht werden. Dabei ist für den Fall, daß der Schließbolzen gekrümmt ist, wie dies bei Vorhängeschlössern mit runder Grundfläche üblich ist, die Sicke gleichfalls in ihrem Verlauf entsprechend gekrümmt.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: eine Sicherungseinrichtung nach der Erfindung in Gebrauchsstellung in einer Seitenansicht
- Fig. 2: ein weiteres Ausführungsbeispiel der Sicherungseinrichtung gleichfalls in einer Seitenansicht
- Fig. 3: eine Vorderansicht auf die Sicherungseinrichtung gemäß des Pfeiles III in den Figuren 1 und 2.
- Fig. 4 und 5: jeweils ein weiteres Ausführungsbeispiel der Sicherungseinrichtung gleichfalls in einer teilweise geschnittenen Vorderansicht

Die in den Figuren dargestellte Sicherungseinrichtung weist ein Gehäuse 1 auf, das kastenförmig ausgebildet ist und bei der gezeigten Gebrauchsstellung auf das Oberteil 2 einer Kugelkopfkupplung für einen Anhänger geschoben ist.

Das Oberteil 2, das fest mit einer anhängerseitigen Deichsel 5 verbunden ist, weist ein Kupplungsgehäuse 3 und einen Handgriff 4 auf.

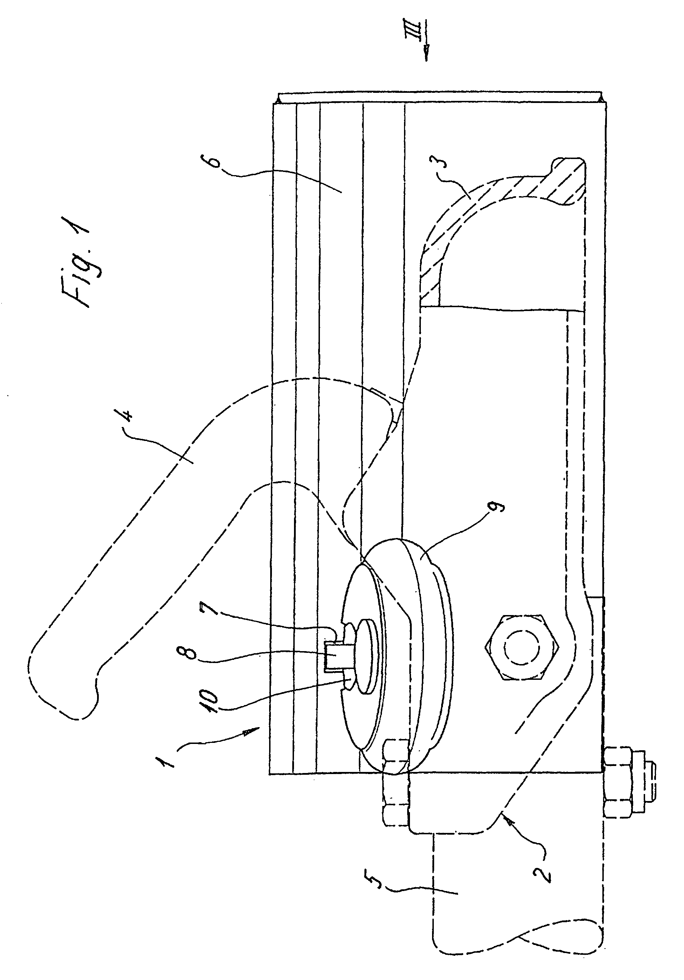

An den sich gegenüberliegenden Längsseiten des Gehäuses 1 sind in Längsachsrichtung sich erstreckende Sicken 6 vorgesehen, die in ihrem Grund jeweils gegenüberliegend eine Durchstecköffnung 7 besitzen, durch die ein Riegel 8 geschoben ist, der einen rechteckigen Querschnitt aufweist und bezogen darauf bei den in den Figuren 1-3 gezeigten Ausführungsbeispielen hochkant gegenüber den Sicken 6 verläuft.

Ein Ende des Riegels 8 ist mit einem abgeplatteten Griffteil 13 versehen, das eine im wesentlichen runde Kontur besitzt, deren Radius etwa der Krümmung der Sicke 6 entspricht, wobei die Breite des Griffteils 13 größer ist als die zugeordnete Höhe der Durchstecköffnung 7. Nach einem Durchstecken des Riegels 8 liegt somit das Griffteil 13 an der Krümmung der Sicke 6 an.

In an sich bekannter Weise verläuft der Riegel 8 oberhalb des Kupplungsgehäuses 3 und zwar bei dem Ausfiihrungsbeispiel nach Figur 1 hinter dem Handgriff 4 in dem der Deichsel 5 zugewandten Endbereich des Gehäuses 1.

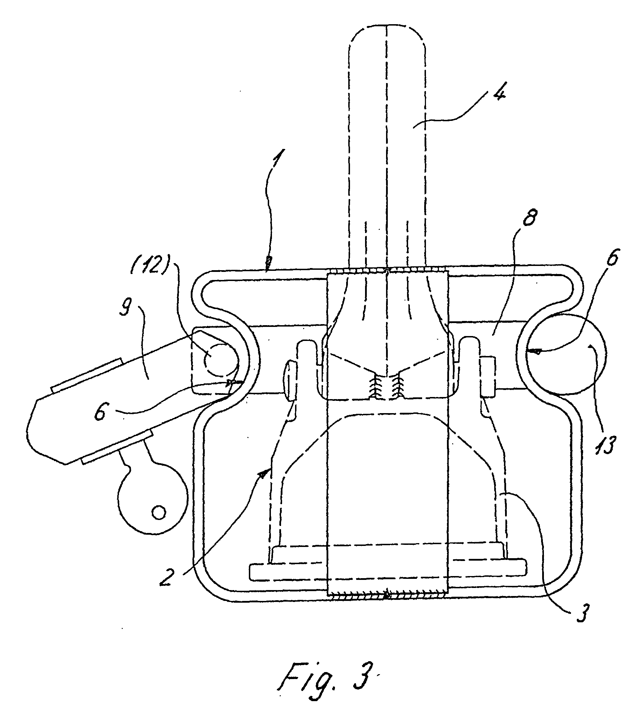

Wie besonders die Figur 3 deutlich zeigt, ist in dem Riegel 8 an seinem dem Griffteil 13 gegenüberliegenden Ende eine Bohrung 12 vorgesehen, in der ein Schließbolzen 10 einer als Vorhängeschloß ausgebildeten Schließeinrichtung 9 geführt ist.

Dieser Schließbolzen 10 verläuft im wesentlichen parallel zu den Wandungen der Sikke 6 und wird ober- und unterseitig von diesen überragt.

Die Schließeinrichtung 9 verläuft mit ihrer Breitseite gleichfalls parallel zur Sicke 6, wobei die Schloßseite nach unten gerichtet ist, also in Richtung der dem Handgriff 4 abgewandten Seite.
Da die Unterseite des Gehäuses 1 gleichfalls weitgehend geschlossen ist, besteht durch die Anordnung des Riegels 8 gemäß der Figur 1 keine Möglichkeit das verriegelte Gehäuse zu entfernen.

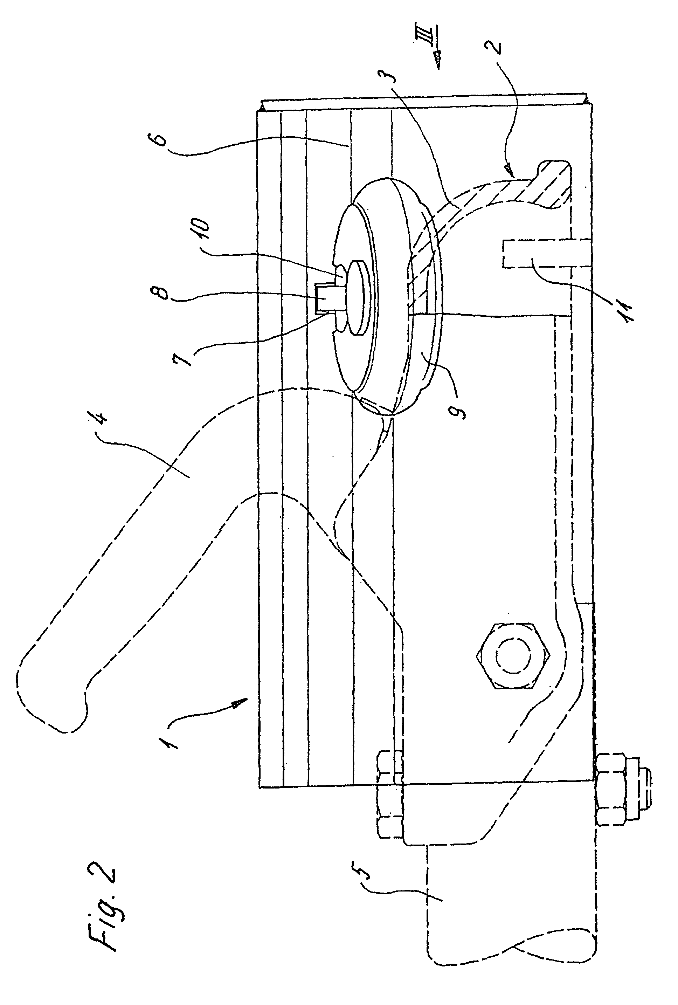

Bei dem in der Figur 2 gezeigten Beispiel verläuft der Riegel vor dem Handgriff 4, also in dem der Deichsel 5 abgewandten Bereich des Gehäuses 1.
Zur Sicherung des Gehäuses 1 ist unterseitig ein Anschlag 11 an dem Gehäuse 1 befestigt, der in das Kupplungsgehäuse 3 ragt.
Hierdurch wird ebenfalls eine zuverlässige Sicherung gewährleistet, da es nicht möglich ist, ohne Entfernen des Riegels 8 den Anschlag 11 zu überwinden.

Wie die Figur 3 zeigt, ist die Breite der Sicken 6 so gehalten, daß sie nur geringfügig größer ist, als die Breite des Riegels 8, so daß auch der Abstand zur Schließeinrichtung 9 gering ist. Hierdurch wird gewährleistet, daß der Einsatz eines Werkzeuges zum gewaltsamen Durchtrennen des Schließbolzens praktisch ausgeschlossen ist. Dies gilt gleichermaßen für das Griffteil 13.

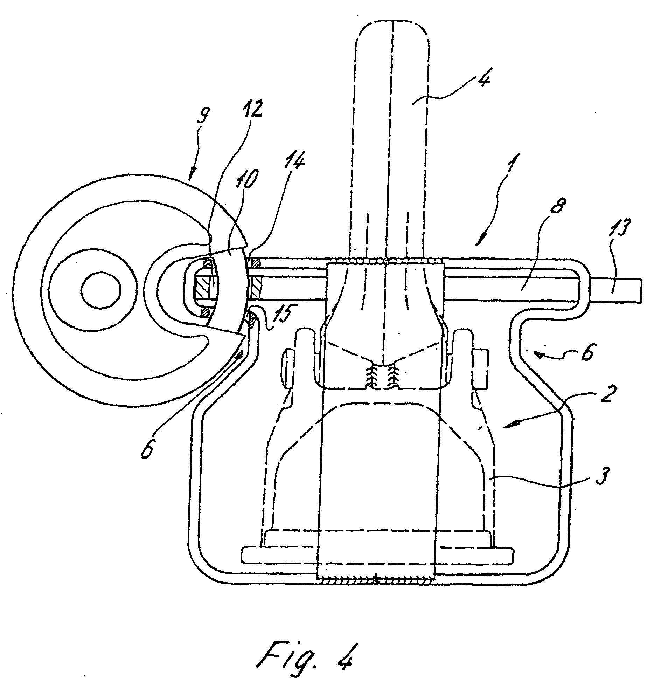

Bei der in der Figur 4 gezeigten Sicherungseinrichtung ist der Riegel 8 oberhalb der Sicke 6, zwischen deren Wandung und der Oberseite des Gehäuses 1 angeordnet. Sowohl die Oberseite, wie auch die zugeordnete Sickenwandung weisen eine Durchgangsöffnung 14,15 auf, durch die der Schließbolzen 10, bei gleichzeitigem Durchtritt der Bohrung 12 des Riegels 8, geführt ist.

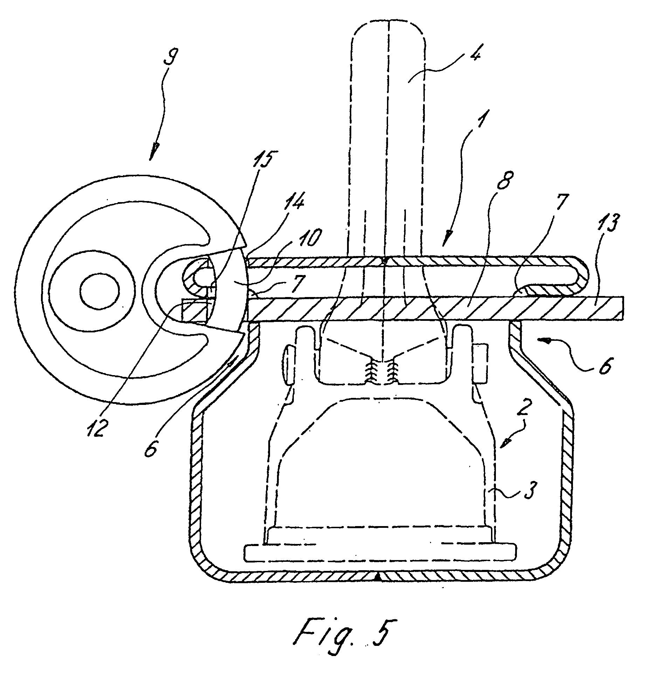

In der Figur 5 ist zu erkennen, daß der Riegel ebenfalls breitseitig parallel zur Sickenwandung verläuft, wobei hier der Riegel 8 den Sickengrund durchtritt, d.h. die Durchstecköffnung 7 befindet sich innerhalb der Sicke 6. Der Schließbolzen 10 wird ebenso durch Durchgangsöffnungen 14,15 der Gehäuseoberseite bzw. der Sickenwand geführt wie bei dem Beispiel nach Figur 4, wobei die Durchgangsöffnung 15 Bestandteil der Durchstecköffnung 7 ist.

## Patentansprüche

1. Sicherungseinrichtung für das einen Handgriff (4) und ein Kupplungsgehäuse (3) aufweisende, an einer Anhängerdeichsel (5) befestigte Oberteil (2) einer Kugelkopfkupplung, mit einem etwa kastenförmigen, in Gebrauchsstellung auf das Oberteil (2) geschobenen Gehäuse (1), in dem ein quer zur Gehäuselängsachse sich erstreckender, axial mittels einer Schließeinrichtung (9) gesicherte Riegel (8) oberhalb des Kupplungsgehäuses (3) angeordnet ist, **dadurch gekennzeichnet, daß** an mindestens einer Längsseite des Gehäuses (1), eine Sicke (6) eingeformt ist, in der ein Schließbolzen (10) der Schließeinrichtung (9) zumindest teilweise eingebettet ist.

2. Sicherungseinrichtung nach Anspruch 1, **dadurch gekennzeichnet, daß** die Sikke (6) im Durchdringungsbereich des Riegels (8) angeordnet ist.

3. Sicherungseinrichtung nach Anspruch 1, **dadurch gekennzeichnet, daß** die Sikke (6) sich in Längsachsrichtung des Gehäuses (1) erstreckt.

4. Sicherungseinrichtung nach Anspruch 1, **dadurch gekennzeichnet, daß** die Oberseite des Gehäuses (1) sowie die dieser zugewandte Wandung der Sicke (6) jeweils mit einer Durchgangsöffnung (14,15) versehen sind, durch die der Schließbolzen (10) ebenso geführt ist wie durch die Bohrung (12) des Riegels (8).

5. Sicherungseinrichtung nach Anspruch 1 oder 4, **dadurch gekennzeichnet, daß** der Riegel (8) oberhalb der Sicke (6), zwischen deren Wandung und der Oberseite des Gehäuses (1) gelagert ist.

6. Sicherungseinrichtung nach Anspruch 1 oder 2, **dadurch gekennzeichnet, daß** auf jeder Längsseite des Gehäuses (1) eine Sicke (6) vorgesehen ist.

7. Sicherungseinrichtung nach Anspruch 1 oder 3, **dadurch gekennzeichnet, daß** die Sicke (6) quer zur Längsachsrichtung des Gehäuses (1) verläuft.

8. Sicherungseinrichtung nach Anspruch 2 oder 4, **dadurch gekennzeichnet, daß** die Sicke (6) sich über die gesamte Länge bzw. Breite der Längsseite des Gehäuses (1) erstreckt

9. Sicherungseinrichtung nach einem der Ansprüche 1 bis 4, **dadurch gekennzeichnet, daß** die Sicke (6) partiell eingebracht ist.

10. Sicherungseinrichtung nach Anspruch 6, **dadurch gekennzeichnet, daß** die Sikke (6) in ihrer Längserstreckung der Kontur des Schließbolzens (10) angepaßt ist.

11. Sicherungseinrichtung nach Anspruch 1, **dadurch gekennzeichnet, daß** der im Querschnitt rechteckige Riegel (8) mit seiner Breitseite quer zur Sicke verläuft.

12. Sicherungseinrichtung nach einem der Ansprüche 1-4, **dadurch gekennzeichnet, daß** die Breite der Sicke (6) geringfügig größer ist als die Breite des Riegels (8).

13. Sicherungseinrichtung nach einem der Ansprüche 1-5, **dadurch gekennzeichnet, daß** der Riegel (8) an seinem dem Schließende gegenüberliegenden Ende ein Griffteil (13) aufweist, das eine etwa runde Kontur besitzt, dessen Durchmesser größer ist als das zugeordnete Abmaß der Durchstecköffnung (7) und dessen Krümmungsradius im Anlagebereich mit der Sicke (6) etwa deren Krümmungsradius entspricht.

14. Sicherungseinrichtung nach Anspruch 1, **dadurch gekennzeichnet, daß** der Schließbolzen (10) der Schließeinrichtung (9) parallel zur Sicke (6) verläuft, wobei deren gegenüberliegende Wandungen den Schließbolzen (10) überragen.

15. Sicherungseinrichtung nach Anspruch 1, **dadurch gekennzeichnet, daß** der Riegel (8) hinter dem Handgriff (4), in dem der Deichsel (5) zugewandten Endbereich durch das Gehäuse (1) geführt ist.

16. Sicherungseinrichtung nach Anspruch 1, **dadurch gekennzeichnet, daß** der Riegel (8) vor dem Handgriff (4) durch das Gehäuse (1) geführt ist.

17. Sicherungseinrichtung nach Anspruch 9, **dadurch gekennzeichnet, daß** an der Unterseite des Gehäuses (1), etwa dem Riegel (8) gegenüberliegend, ein Anschlag (11) vorgesehen ist, der in das Kupplungsgehäuse (3) ragt.

## Claims

1. Security device for the upper part (2) which comprises a handle (4) and a coupling housing (3) and which is fastened to a trailer drawbar (5), of a ball-head coupling, with an approximately box-shaped housing (1) which in the use setting is pushed onto the upper part (2) and in which a lock bar (8) extending transversely to the housing longitudinal axis and axially secured by means of a locking device (9) is arranged above the coupling housing (3), **characterised in that** a corrugation (6), in which a latch pin (10) of the locking device (9) is at least partly embedded, is formed in at least one longitudinal side of the housing (1).

2. Security device according to claim 1, **characterised in that** the corrugation (6) is arranged in the penetration region of the lock bar (8).

3. Security device according to claim 1, **characterised in that** the corrugation (6) extends in longitudinal axial direction of the housing (1).

4. Security device according to claim 1, **characterised in that** the upper side of the housing (1) and the wall, which faces this, of the corrugation (6) are each provided with a respective passage opening (14, 15) through which the latch pin (10) is guided just as through the bore (12) of the lock bar (8).

5. Security device according to claim 1 or 4, **characterised in that** the lock bar (8) is mounted above the corrugation (6) between the wall thereof and the upper side of the housing (1).

6. Security device according to claim 1 or 2, **characterised in that** a corrugation (6) is provided on each longitudinal side of the housing (1).

7. Security device according to claim 1 or 3, **characterised in that** the corrugation (6) extends transversely to the longitudinal axial direction of the housing (1).

8. Security device according to claim 2 or 4, **characterised in that** the corrugation (6) extends over the entire length or width of the longitudinal side of the housing (1).

9. Security device according to one of claims 2 to 4, **characterised in that** the corrugation (6) is provided only in a part.

10. Security device according to claim 6, **characterised in that** the corrugation (6) is adapted in its length dimension to the contour of the latch pin (10).

11. Security device according to claim 1, **characterised in that** the lock bar (8), which is rectangular in cross-section, extends by its wide side transversely to the corrugation.

12. Security device according to one of claims 1 to 4, **characterised in that** the width of the corrugation (6) is slightly greater than the width of the lock bar (8).

13. Security device according to one of claims 1 to 5, **characterised in that** the lock bar (8) has at its end opposite the locking end a grip part (13) having an approximately round profile, the diameter of which is larger than the associated dimension of the insertion opening (7) and the radius of curvature of which in the region of contact with the corrugation approximately corresponds with the radius of curvature thereof.

14. Security device according to claim 1, **characterised in that** the latch pin (10) of the locking device (9) extends parallel to the corrugation (6), wherein the oppositely disposed walls thereof project beyond the latch pin (10).

15. Security device according to claim 1, **characterised in that** the lock bar (8) is guided, behind the handle (4), through the housing (1) in the end region facing the drawbar (5).

16. Security device according to claim 1, **characterised in that** the lock bar (8) is guided through the housing (1) in front of the handle (4).

17. Security device according to claim 9, **characterised in that** an abutment (11), which projects into the coupling housing (3), is provided at the underside of the housing (1) approximately opposite to the lock bar (8).

## Revendications

1. Dispositif de sécurité destiné à une partie supérieure (2) d'un accouplement à boule, présentant une poignée (4) et un boîtier de l'accouplement (3), fixée sur une barre d'attelage (5), d'un accouplement à boule, comprenant un boîtier (1) présentant approximativement la forme d'une boîte, glissé, en position d'utilisation, sur la partie supérieure (2), dans lequel est monté, au-dessus du boîtier de l'accouplement (3), un verrou (8) s'étendant perpendiculairement à l'axe longitudinal du boîtier, fixé axialement au moyen d'un dispositif de fermeture (9), **caractérisé en ce que,** sur au moins un grand côté du boîtier (1), est formée une moulure (6) dans laquelle un boulon de fermeture (10) du dispositif de fermeture (9) est au moins partiellement encastré.

2. Dispositif de sécurité selon la revendication 1, **caractérisé en ce que** la moulure (6) se trouve dans la zone de pénétration du verrou (8).

3. Dispositif de sécurité selon la revendication 1, **caractérisé en ce que** la moulure (6) s'étend dans la direction de l'axe longitudinal du boîtier (1).

4. Dispositif de sécurité selon la revendication 1, **caractérisé en ce que** la face supérieure du boîtier (1), ainsi que la paroi, orientée vers celle-ci, de la moulure (6), sont pourvues chacune d'une ouverture traversante (14, 15), à travers laquelle le boulon de fermeture (10) est introduit, tout comme à travers le perçage (12) du verrou (8).

5. Dispositif de sécurité selon la revendication 1 ou 4, **caractérisé en ce que** le verrou (8) est monté au-dessus de la moulure (6), entre sa paroi et la face supérieure du boîtier (1).

6. Dispositif de sécurité selon la revendication 1 ou 2, **caractérisé en ce qu'**une moulure (6) est prévue sur chaque grand côté du boîtier (1).

7. Dispositif de sécurité selon la revendication 1 ou 3, **caractérisé en ce que** la moulure (6) s'étend perpendiculairement à la direction de l'axe longitudinal du boîtier (1).

8. Dispositif de sécurité selon la revendication 2 ou 4, **caractérisé en ce que** la moulure (6) s'étend sur toute la longueur ou la largeur du grand côté du boîtier (1).

9. Dispositif de sécurité selon l'une des revendications 1 à 4, **caractérisé en ce que** la moulure (6) est appliquée de façon partielle.

10. Dispositif de sécurité selon la revendication 6, **caractérisé en ce que** la moulure (6), sur sa longueur, est adaptée au contour du boulon de fermeture (10).

11. Dispositif de sécurité selon la revendication 1, **caractérisé en ce que** le côté plat du verrou (8), dont la section transversale est rectangulaire, s'étend perpendiculairement à la moulure.

12. Dispositif de sécurité selon l'une des revendications 1-4, **caractérisé en ce que** la largeur de la moulure (6) est légèrement plus importante que la largeur du verrou (8).

13. Dispositif de sécurité selon l'une des revendications 1-5, **caractérisé en ce que** le verrou (8), à son extrémité opposée à l'extrémité de fermeture, présente une poignée (13), possédant un contour approximativement rond, dont le diamètre est supérieur à la dimension associée de l'ouverture traversante (7) et dont le rayon de courbure, dans la zone de contact avec la moulure (6), correspond approximativement à son rayon de courbure.

14. Dispositif de sécurité selon la revendication 1, **caractérisé en ce que** le boulon de fermeture (10) du dispositif de fermeture (9) s'étend parallèlement à la moulure (6), ses parois opposées surplombant le boulon de fermeture (10).

15. Dispositif de sécurité selon la revendication 1, **caractérisé en ce que** le verrou (8) est introduit dans le boîtier (1) derrière la poignée (4), dans la zone terminale orientée en direction de la barre d'attelage (5).

16. Dispositif de sécurité selon la revendication 1, **caractérisé en ce que** le verrou (8) est introduit dans le boîtier (1) devant la poignée (4).

17. Dispositif de sécurité selon la revendication 9, **caractérisé en ce qu'**est prévue, sur la face inférieure du boîtier (1), par exemple en regard du verrou (8), une butée (11) qui pénètre dans le boîtier de l'accouplement (3).
